(19) **Europäisches Patentamt**
**European Patent Office**
**Office européen des brevets**

(11) **EP 4 572 484 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
*H04W 72/0457* (2023.01)    *H04W 72/23* (2023.01)

(21) Application number: **22955036.3**

(52) Cooperative Patent Classification (CPC):
**H04W 72/0457; H04W 72/23**

(22) Date of filing: **12.08.2022**

(86) International application number:
**PCT/JP2022/030746**

(87) International publication number:
**WO 2024/034121 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(72) Inventors:
• **OKANO Mayuko**
  **Tokyo 100-6150 (JP)**
• **HARADA Hiroki**
  **Tokyo 100-6150 (JP)**
• **OKAMURA Masaya**
  **Tokyo 100-6150 (JP)**

(74) Representative: **Hoffmann Eitle**
**Patent- und Rechtsanwälte PartmbB**
**Arabellastraße 30**
**81925 München (DE)**

(71) Applicant: **NTT DOCOMO, INC.**
**Tokyo 100-6150 (JP)**

(54) **TERMINAL, BASE STATION, WIRELESS COMMUNICATION SYSTEM, AND WIRELESS COMMUNICATION METHOD**

(57)    A terminal includes: a receiving unit that receives a single specific downlink control information for scheduling a channel to be transmitted on two or more carriers; and a control unit that identifies a specific resource element associated with the specific downlink control information. The control unit identifies the specific resource element using a specific parameter for the specific downlink control information.

FIG. 4

## Description

[Technical Field]

The present disclosure relates to a terminal, a base station, a radio communication system, and a radio communication method which support a mechanism for scheduling PDSCH or PUSCH to be transmitted on two or more CCs by a single DCI transmitted on a certain CC.

[Background Art]

The 3rd Generation Partnership Project (3GPP) specifies the 5th generation mobile communication system (also referred to as 5G, New Radio (NR), or Next Generation (NG)), and is also promoting next-generation specifications called Beyond 5G, 5G Evolution, or 6G.

Further, in Release 18 of 3GPP, CA (Carrier Aggregation) using both of intra-band and inter-band has been studied. Specifically, introduction of a mechanism for scheduling PDSCH (Physical Downlink Shared Channel) or PUSCH (Physical Uplink Shared Channel) to be transmitted on two or more CCs (Component Carriers) by a single DCI (Downlink Control Information) transmitted on a certain CC, has been studied. The mechanism may be referred to as Single DCI Multi-carrier PDSCH/PUSCH scheduling, Single DCI Multi-Cell PDSCH/PUSCH scheduling, or the like (e.g., Non-Patent Literature 1).

[Citation List]

[Non-Patent Literature]

[Non Patent Literature 1] "New WID on Multi-carrier enhancements", RP-213577, 3GPP TSG RAN Meeting #94e, 3GPP, December 2021.

[Summary of Invention]

By the way, before Release 17, a mechanism for scheduling PDSCH or PUSCH to be transmitted another one CC by a DCI transmitted on a certain CC (Cross-carrier scheduling) has been known.

In such a background, as a result of diligent study, inventors have found that if it is assumed that Single DCI Multi-carrier PDSCH/PUSCH scheduling and Cross-carrier scheduling are supported simultaneously, it is not possible to distinguish a DCI (i.e., PDCCH: Physical Downlink Control Channel) transmitted on a certain CC between Single DCI Multi-carrier PDSCH/PUSCH scheduling and Cross-carrier scheduling before a blind decode. In other words, the inventors have found that when a CCE (Control Channel Element) of PDCCH is calculated, a CCE index for Single DCI Multi-carrier PDSCH/PUSCH scheduling becomes the same as a CCE index for Cross-carrier scheduling.

Therefore, the present invention has been made to solve the above-described problems, and aims to provide a terminal, a base station, a radio communication system, and a radio communication method capable of properly identifying a CCE in Single DCI Multi-carrier PDSCH/PUSCH scheduling.

An aspect of the disclosure is a terminal including: a receiving unit that receives a single specific downlink control information for scheduling a channel to be transmitted on two or more carriers; and a control unit that identifies a specific resource element associated with the specific downlink control information, wherein the control unit identifies the specific resource element using a specific parameter for the specific downlink control information.

An aspect of the disclosure is a base station including: a transmitting unit that transmits a single specific downlink control information for scheduling a channel to be transmitted on two or more carriers; and a control unit that assumes that a terminal identifies a specific resource element associated with the specific downlink control information, wherein the control unit assumes that the terminal identifies the specific resource element using a specific parameter for the specific downlink control information.

An aspect of the disclosure is a radio communication system including a terminal and a base station, wherein the terminal includes: a receiving unit that receives a single specific downlink control information for scheduling a channel to be transmitted on two or more carriers; and a control unit that identifies a specific resource element associated with the specific downlink control information, wherein the control unit identifies the specific resource element using a specific parameter for the specific downlink control information.

An aspect of the disclosure is a radio communication method including: a step A of receiving a single specific downlink control information for scheduling a channel to be transmitted on two or more carriers; and a step B of identifying a specific resource element associated with the specific downlink control information, wherein the step B includes a step for identifying the specific resource element using a specific parameter for the specific downlink control information.

[Brief Description of Drawings]

[FIG. 1] FIG. 1 is an overall schematic configuration diagram of a radio communication system 10.

[FIG. 2] FIG. 2 is a diagram illustrating frequency ranges used in the radio communication system 10.

[FIG. 3] FIG. 3 is a diagram illustrating a configuration example of a radio frame, a subframe, and a slot used in the radio communication system 10.

[FIG. 4] FIG. 4 is a functional block configuration diagram of a UE 200.

[FIG. 5] FIG. 5 is a functional block configuration diagram of a gNB 100.

[FIG. 6] FIG. 6 is a diagram explaining a problem.

[FIG. 7] FIG. 7 is a diagram explaining an applicable condition.

[FIG. 8] FIG. 8 is a diagram explaining an applicable condition.

[FIG. 9] FIG. 9 is a diagram explaining an applicable condition.

[FIG. 10] FIG. 10 is a diagram illustrating an example of a hardware configuration of each of the gNB 100 and the UE 200.

[FIG. 11] FIG. 11 is a diagram illustrating a configuration example of a vehicle 2001.

[Modes for Carrying out the Invention]

Hereinafter, an embodiment will be described based on the drawings. Note that, the same functions and configurations are denoted by the same or similar reference signs, and their description will be omitted as appropriate.

[Embodiment]

(1) Overall Schematic Configuration of Radio Communication System

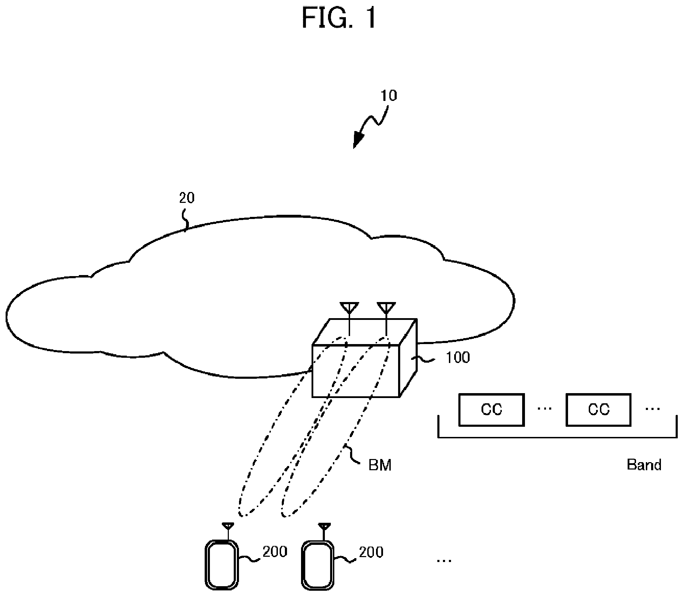

FIG. 1 is an overall schematic configuration diagram of a radio communication system 10 according to the embodiment. The radio communication system 10 is a radio communication system according to 5G New Radio (NR), and includes a Next Generation-Radio Access Network 20 (hereinafter, NG-RAN 20) and a terminal 200 (hereinafter, UE (User Equipment) 200).

Note that, the radio communication system 10 may be a radio communication system according to a scheme called Beyond 5G, 5G Evolution, or 6G.

The NG-RAN 20 includes a base station 100 (hereinafter, gNB 100). Note that, the specific configuration of the radio communication system 10 including the number of gNBs 100 and UEs 200 is not limited to that of the example illustrated in FIG. 1.

The NG-RAN 20 actually includes multiple NG-RAN Nodes, specifically, gNBs (or ng-eNBs), and is connected to a core network (5GC, not illustrated) according to 5G. Note that, the NG-RAN 20 and 5GC may be simply expressed as a "network".

The gNB 100 is a radio base station according to 5G, and performs radio communication with the UE 200 according to 5G. The gNB 100 and the UE 200 can be compatible with Massive MIMO (Multiple-Input Multiple-Output) that generates a beam BM with higher directivity by controlling radio signals to be transmitted from multiple antenna elements, carrier aggregation (CA) that uses multiple component carriers (CCs) in a bundle, dual connectivity (DC) that communicates with two or more transport blocks at the same time between the UE and each of two NG-RAN Nodes, and the like.

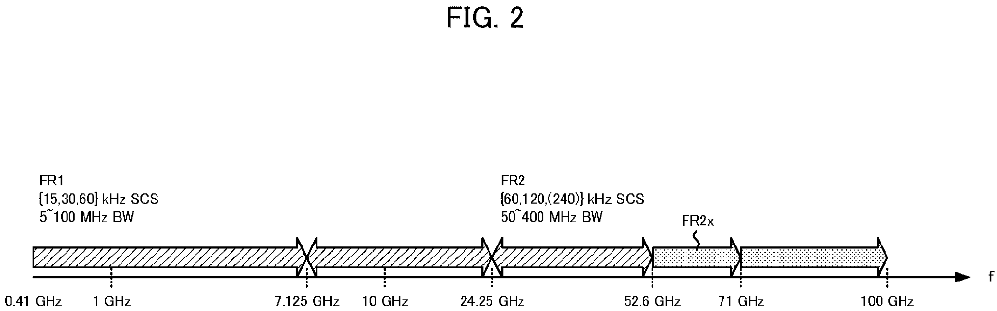

In addition, the radio communication system 10 is compatible with multiple frequency ranges (FRs). FIG. 2 is a diagram illustrating frequency ranges used in the radio communication system 10.

As illustrated in FIG. 2, the radio communication system 10 is compatible with an FR1 and an FR2. Frequency bands of the respective FRs are as follows.

- FR1: 410 MHz to 7.125 GHz
- FR2: 24.25 GHz to 52.6 GHz

In the FR1, a Sub-Carrier Spacing (SCS) of 15, 30, or 60 kHz may be used, and a bandwidth (BW) of 5 to 100 MHz may be used. The FR2 has a higher frequency than the FR1, and an SCS of 60 or 120 kHz (240 kHz may be included) may be used, and a bandwidth (BW) of 50 to 400 MHz may be used.

Note that, the SCS may be interpreted as numerology. The numerology is defined in 3GPP TS38.300 and corresponds to one sub-carrier spacing in a frequency domain.

Further, the radio communication system 10 is also compatible with a higher frequency band than the FR2 frequency band. Specifically, the radio communication system 10 is compatible with a frequency band greater than 52.6 GHz and up to 71 GHz or 114.25 GHz. Such a high frequency band may be referred to as "FR2x" for convenience.

In order to solve the problem that the influence of phase noise becomes larger in the high frequency band, in the case of using a band exceeding 52.6 GHz, Cyclic Prefix-Orthogonal Frequency Division Multiplexing (CP-OFDM)/ Discrete Fourier Transform-Spread (DFT-S-OFDM) having a larger Sub-Carrier Spacing (SCS) may be applied.

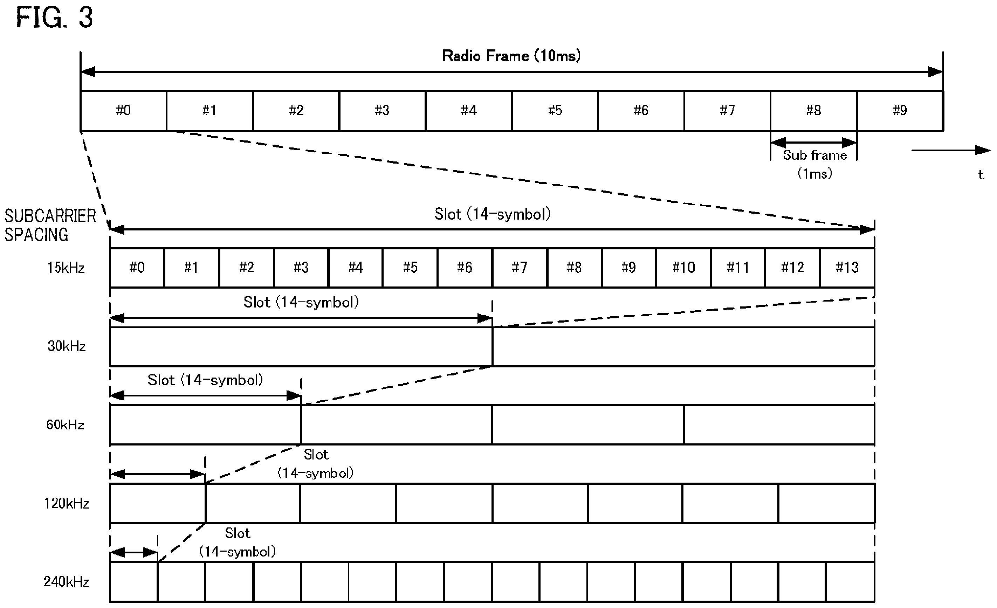

FIG. 3 is a diagram illustrating a configuration example of a radio frame, a subframe, and a slot used in the radio communication system 10.

As illustrated in FIG. 3, one slot includes 14 symbols, and a symbol period (and a slot period) becomes shorter as the SCS becomes larger (wider). The SCS is not limited to the interval (frequency) illustrated in FIG. 3. For example, 480 kHz, 960 kHz, or the like may be used.

In addition, the number of symbols constituting one slot is not necessarily 14 symbols (for example, 28 symbols or 56 symbols). Further, the number of slots per subframe may be different depending on the SCS.

Note that, a time direction (t) illustrated in FIG. 3 may be referred to as a time domain, a symbol period, a symbol time, or the like. In addition, a frequency direction may be referred to as a frequency domain, a resource block, a subcarrier, a Bandwidth part (BWP), or the like.

A DMRS is a kind of reference signal, and is prepared for various channels. Here, unless otherwise specified, it may mean a downlink data channel, specifically, a DMRS for PDSCH (Physical Downlink Shared Channel). However, an uplink data channel, specifically, a DMRS for PUSCH (Physical Uplink Shared Channel) may be construed as being similar to the DMRS for PDSCH.

The DMRS may be used for channel estimation at the UE 200 as part of a device, e.g., coherent demodulation. The DMRS may exist only in resource blocks (RBs) used for PDSCH transmission.

The DMRS may have multiple mapping types. Specifically, the DMRS has a mapping type A and a mapping type B. In the mapping type A, the first DMRS is allocated in the second or third symbol of a slot. In the mapping type A, the DMRS may be mapped based on a boundary between slots regardless of where in a slot actual data transmission starts. The reason why the first DMRS is allocated in the second or third symbol of a slot may be construed as for the purpose of allocating the first DMRS after control resource sets (CORESET).

In the mapping type B, the first DMRS may be allocated in the first symbol of data assignment. In other words, the DMRS may be given relatively to a location where data is allocated, not to the boundary between slots.

Further, the DMRS may have multiple types (Types). Specifically, the DMRS has a Type 1 and a Type 2. The Type 1 and Type 2 are different in mapping and the maximum number of orthogonal reference signals in a frequency domain. The Type 1 can output up to four orthogonal signals in a single-symbol DMRS, and the Type 2 can output up to eight orthogonal signals in a double-symbol DMRS.

(2) Functional Block Configuration of Radio Communication System

Next, a functional block configuration of the radio communication system 10 will be described.

First, a functional block configuration of the UE 200 will be described.

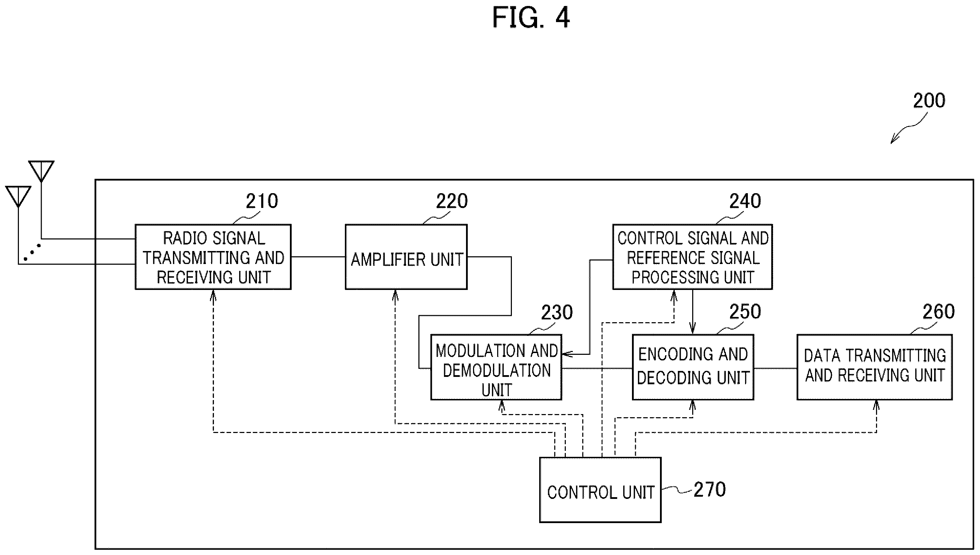

FIG. 4 is a functional block configuration diagram of the UE 200. As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 deals with Massive MIMO, CA in which multiple CCs are bundled and used, DC in which communication is simultaneously performed between the UE and each of two NG-RAN Nodes, and the like.

The amplifier unit 220 includes a PA (Power Amplifier) / LNA (Low Noise Amplifier) and the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predetermined communication destination (gNB 100 or another gNB). In the modulation and demodulation unit 230, Cyclic Prefix-Orthogonal Frequency Division Multiplexing (CP-OFDM)/ Discrete Fourier Transform-Spread (DFT-S-OFDM) may be applied. Further, DFT-S-OFDM may be used not only for uplink (UL) but also for downlink (DL).

The control signal and reference signal processing unit 240 executes processing related to various control signals transmitted and received by the UE 200, and processing related to various reference signals transmitted and received by the UE 200.

Specifically, the control signal and reference signal processing unit 240 receives various control signals transmitted from the gNB 100 via a predetermined control channel, for example, a control signal of a radio resource control layer (RRC). Further, the control signal and reference signal processing unit 240 transmits various control signals to the gNB 100 via a predetermined control channel.

The control signal and reference signal processing unit 240 executes processing using a reference signal (RS) such as a Demodulation Reference Signal (DMRS) and a Phase Tracking Reference Signal (PTRS).

The DMRS is a known terminal-specific reference signal (pilot signal) between the base station and the terminal for estimating a phasing channel used for data demodulation. The PTRS is a terminal-specific reference signal designed for the purpose of estimating phase noise that is a problem in a high frequency band.

Note that, the reference signal may include a Channel State Information-Reference Signal (CSI-RS), a Sounding Reference Signal (SRS), and a Positioning Reference Signal (PRS) for position information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channel includes a PDSCH (Physical Downlink Shared Channel), a PUSCH (Physical Uplink Shared Channel), and the like. Data means data transmitted via the data channel. The data channel may be interchanged with a shared channel.

Here, the control signal and reference signal processing unit 240 may receive downlink control information (DCI). The DCI includes, as the existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like.

A value stored in the DCI Format field is an information element specifying the format of the DCI. A value stored in the CI field is an information element specifying a CC for which the DCI is applied. A value stored in the BWP indicator field is an information element specifying a BWP for which the DCI is applied. The BWP that can be specified by the BWP indicator is configured by an information element (BandwidthPart-Config) included in an RRC message. A value stored in the FDRA field is an information element specifying a frequency domain resource for which the DCI is applied. The frequency domain resource is identified by a value stored in the FDRA field and an information element (RA Type) included in the RRC message. A value stored in the TDRA field is an information element specifying a time domain resource for which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in the MCS field is an information element specifying an MCS for which the DCI is applied. The MCS is identified by a value stored in the MCS and an MCS table. The MCS table may be specified by the RRC message, or may be identified by RNTI scrambling. A value stored in the HPN field is an information element specifying a HARQ Process for which the DCI is applied. A value stored in the NDI is an information element for identifying whether data for which the DCI is applied is first transmission data. A value stored in the RV field is an information element specifying redundancy of data for which the DCI is applied.

In the embodiment, the control signal and reference signal processing unit 240 constitutes a receiving unit that receives a single (one) specific downlink control information (hereinafter, specific DCI) for scheduling a channel to be transmitted on two or more carriers. The two or more carriers may be considered to be two or more CCs. The channel scheduled by the single specific DCI may be PDSCH or PUSCH.

Here, a mechanism for scheduling the PDSCH or the PUSCH to be transmitted on the two or more CCs by the single specific DCI transmitted on a certain CC, is a newly introduced mechanism. The mechanism may be referred to as Single DCI Multi-carrier PDSCH/PUSCH scheduling, Single DCI Multi-Cell PDSCH/PUSCH scheduling, or the like. A format of the specific DCI may be referred to as DCI format 0_3, DCI format 1_3, or the like.

The encoding and decoding unit 250 performs data division and coupling, channel coding and decoding, and the like for each predetermined communication destination (gNB 100 or another gNB).

Specifically, the encoding and decoding unit 250 divides data output from the data transmitting and receiving unit 260 into predetermined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each functional block constituting the UE 200. In the embodiment, the control unit 270 constitutes a control unit that identifies a specific resource element associated with the specific DCI. The control unit 270 identifies the specific resource element using a specific parameter for the specific DCI.

Here, the resource element associated with the DCI may be referred to as a CCE (Control Channel Element). The CCE is composed of REG(s) (Resource Element Group(s)) each of which includes two or more Resource Elements. The CCE may be associated with an index (CCE index) for identifying the CCE. The number of CCE(s) allocated to the PDCCH may be referred to as AL (Aggregation Level).

Secondly, a functional block configuration of the gNB 100 will be described.

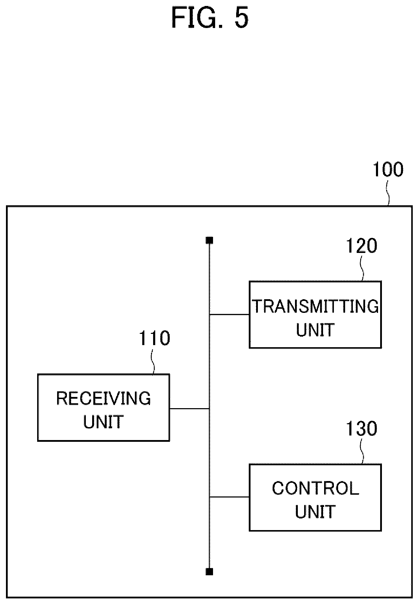

FIG. 5 is a functional block configuration diagram of the gNB 100. As illustrated in FIG. 5, the gNB 100 includes a receiving unit 110, a transmitting unit 120, and a control unit 130.

The receiving unit 110 receives various signals from the UE 200. The receiving unit 110 may receive a UL signal via the PUCCH or the PUSCH.

The transmitting unit 120 transmits various signals to the UE 200. The transmitting unit 120 may transmit a DL signal via the PDCCH or the PDSCH. In the embodiment, the transmitting unit 120 constitutes a transmitting unit that transmits a single specific DCI for scheduling the channel (PDSCH/PUSCH) to be transmitted on the two or more carriers (CCs).

The control unit 130 controls the gNB 100. In the embodiment, the control unit 130 constitutes a control unit that assumes that the UE 200 identifies a specific resource element (CCE) associated with the specific DCI. The control unit 130 assumes that the UE 200 identifies the specific resource element using a specific parameter for the specific DCI. In other words, the transmitting unit 120 transmits the specific DCI (PDCCH) using the assumed specific resource element.

(3) Problem

First, a method for identifying a CCE associated with the existing DCI will be described. The method for identifying the DCI may be considered to be a method for calculating a CCE index. Specifically, the UE 200 calculates the CCE index according to the following expression.

[Expression 1]

$$L \cdot \left\{ \left( Y_{p,n_{s,f}^{\mu}} + \left\lfloor \frac{m_{s,n_{CI}} N_{CCE,p}}{L \cdot M_{s,max}^{(L)}} \right\rfloor + n_{CI} \right) \bmod \left\lfloor N_{CCE,p} / L \right\rfloor \right\} + i$$

L is Aggregation Level corresponding to PDCCH candidate. $n_{CI}$ is a value in the CI field included in the DCI and is set by a higher layer parameter (CrossCarrierSchedulingConfig). $m_{s,n\_CI}$ is the number of PDCCH candidates the UE 200 is configured to monitor for Aggregation Level L of a search space set s of a serving Cell corresponding to $n_{CI}$ (search space in a slot $n^{u}\_s,f$). $M^{(L)}\_s,max$ is the number of PDCCH candidates over all configured $n_{CI}$ for Aggregation Level L of the search space set **s.**

Details of the parameters related to the above-described expression may be found in 3GPP TS38.213 V17.2.0, 10.1 "UE procedure for determining physical downlink control channel assignment".

Here, if a mechanism for scheduling PDSCH or PUSCH to be transmitted by another one CC (Cross-carrier scheduling) is not configured by a DCI transmitted by a certain CC, the $n_{CI}$ set in the CrossCarrierSchedulingConfig may be 0. In other words, the value in the CI field included in the DCI may not be set by the CrossCarrierSchedulingConfig. If the CrossCarrierSchedulingConfig is configured, the $n_{CI}$ set in the CrossCarrierSchedulingConfig may be a value expressed in 3 bits. The value in the CI field included in the DCI may be set to 3 bits by the CrossCarrierSchedulingConfig. The details of the CrossCarrierSchedulingConfig may be found in 3GPP TS 331 V17.2. 0 6.3.2 "Radio resource control information elements".

Secondly, a case where Single DCI Multi-carrier PDSCH/PUSCH scheduling and Cross-carrier scheduling are simultaneously supported will be described.

In order to distinguish between Single DCI Multi-carrier PDSCH/PUSCH scheduling and Cross-carrier scheduling, Cross-carrier scheduling may be referred to as Single cell scheduling. In order to distinguish between Single DCI Multi-carrier PDSCH/PUSCH scheduling and Single cell scheduling, Single DCI Multi-carrier PDSCH/PUSCH scheduling may be referred to as Multi-cell scheduling.

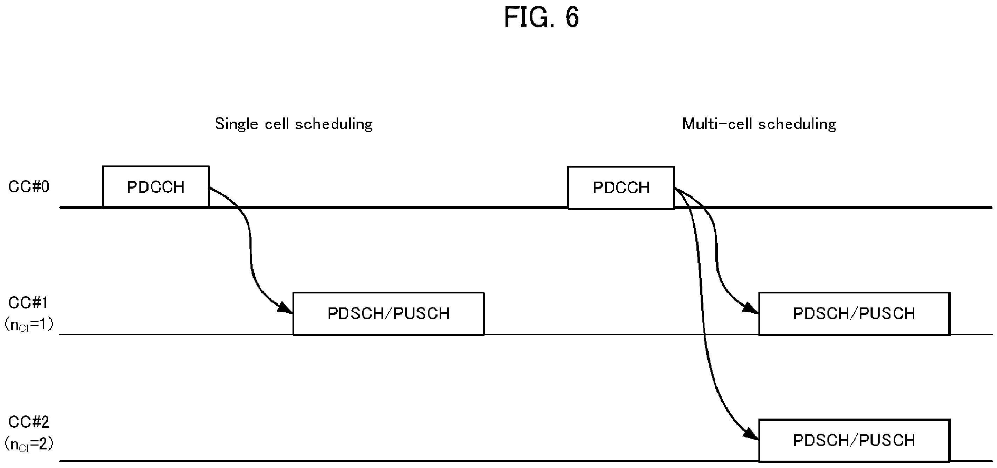

As illustrated in FIG. 6, in Single cell scheduling, PDCCH transmitted on CC#0 schedules PDSCH/PUSCH to be transmitted on CC#1. On the other hand, in Multi-cell scheduling, PDCCH transmitted on CC#0 schedules PDSCH/PUSCH to be transmitted on CC#1 and PDSCH/PUSCH to be transmitted on CC#2.

In the case, if it is assumed that $n_{CI} = 1$ is set as $n_{CI}$ to be used in Multi-cell scheduling, the $n_{CI}$ to be used in Multi-cell scheduling becomes the same as the $n_{CI}$ to be used in Single cell scheduling. For example, in a case where different tables are employed between Single cell scheduling and Multi-cell scheduling as a table in which $n_{CI}$ is associated with CC, there is a possibility that the $n_{CI}$ to be used in Multi-cell scheduling becomes the same as the $n_{CI}$ to be used in Single cell scheduling. If the UE 200 calculates a CCE index according to the above-identified expression using it, the same CCE index is obtained therebetween. Therefore, the UE 200 cannot distinguish between the DCI (existing DCI) in Single cell scheduling and the DCI (specific DCI) in Multi-cell scheduling. This prevents the UE 200 from properly receiving PDSCH/PUSCH.

As a result of diligent study, the inventors have found it necessary to properly identify a CCE in Single DCI Multi-carrier PDSCH/PUSCH scheduling.

(4) Applicable Condition

Next, a method for identifying two or more CCs scheduled by the specific DCI in Single DCI Multi-carrier PDSCH/PUSCH scheduling will be described. In other words, an applicable condition of the embodiment for identifying a CCE associated with the specific DCI will be described. As the applicable condition, the following options are considered.

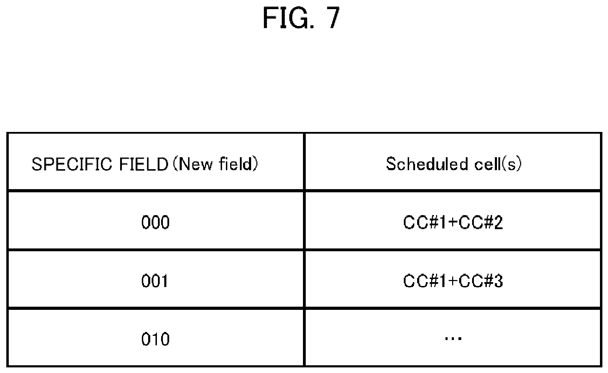

In Option 1, it may be assumed that a specific field to be used in Single DCI Multi-carrier PDSCH/PUSCH scheduling is included in the specific DCI. The specific field is a field newly defined for the field included in the existing DCI. In this case, as illustrated in FIG. 7, the CC(s) (Scheduled cell (s)) scheduled by the specific DCI is associated with a value in the specific field. The association (e.g., table) illustrated in FIG. 7, is configured by a higher layer parameter.

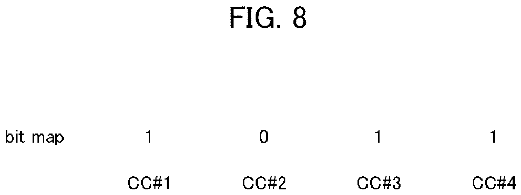

In Option 2, as illustrated in FIG. 8, the CC(s) (Scheduled cell(s)) scheduled by the specific DCI may be identified in a bit map format. The bit map illustrated in FIG. 8 may be included in the specific DCI. The bit map illustrated in FIG. 8 is a field newly defined for the field included in the existing DCI.

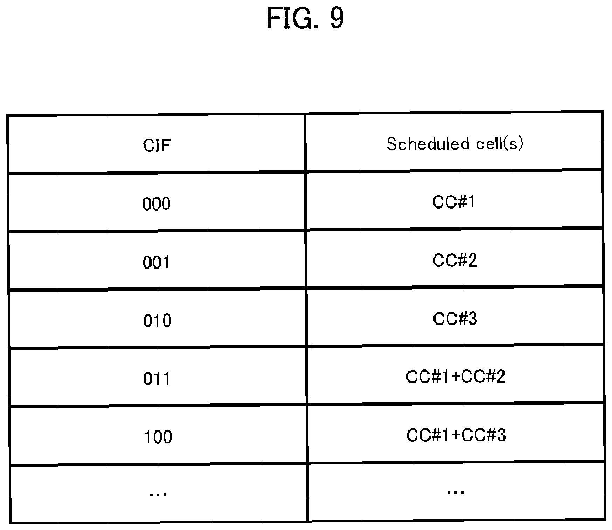

In Option 3, as illustrated in FIG. 9, the CC(s) (Scheduled cell (s)) scheduled by the specific DCI is associated with a value in the existing field included in the specific DCI. The existing field may be the CI field or the FDRA field. In FIG. 9, the CI field (CIF) is illustrated as the existing field. The association (e.g., table) illustrated in FIG. 9, is configured by a higher layer parameter.

Note that if it is assumed that the DCI is transmitted on CC#0, it may be considered that CIF = 000, 001, or 010 indicates Cross-carrier scheduling, and CIF = 011 or 100 indicates Single DCI Multi-carrier PDSCH/PUSCH scheduling. A table to be used in Cross-carrier scheduling may be defined independent of a table to be used in Single DCI Multi-carrier PDSCH/PUSCH scheduling.

(5) Operation Examples

Next, operation examples each in which a CCE associated with the specified DCI is identified (CCE index is calculated) will be described. As the operation examples, any one of the options 1 to 3 of the above-described applicable condition may be employed. As the operation examples, it can be considered the following operation examples.

(5.1) Operation Example 1

In Operation Example 1, a parameter newly defined independent of the existing parameter used for identifying the resource element (CCE) associated with the existing DCI, is employed as the specific parameter for the specific DCI. For example, the CCE index associated with the specific DCI is calculated according to the following expression.

[Expression 2]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} + n_{CI\_MC} \right) \bmod \lfloor N_{CCE,p}/L \rfloor \right\} + i$$

L is Aggregation Level corresponding to PDCCH candidate. $n_{CI}$ is a value in the CI field included in the DCI and is set by a higher layer parameter (CrossCarrierSchedulingConfig). $m_{s,n\_CI}$ is the number of PDCCH candidates the UE 200 is configured to monitor for Aggregation Level L of a search space set s for a serving Cell corresponding to $n_{CI}$ (search space in a slot $n^{\mu}$_s,f). $M^{(L)}$_s,max is the number of PDCCH candidates over all configured $n_{CI}$ for Aggregation Level L of the search space set s. $n_{CI\_MC}$ is a specific parameter newly defined independent of the existing parameter.

Here, in a case where Single DCI Multi-carrier PDSCH/PUSCH scheduling is configured, the specific parameter ($n_{CI\_MC}$) may be set by a higher layer parameter or be previously determined by the radio communication system 10. The specific parameter ($n_{CI\_MC}$) may be considered to be a parameter introduced to distinguishing between the existing DCI and the specific DCI.

The specific parameter ($n_{CI\_MC}$) may be a parameter applied only to the specific DCI. The format of the specific DCI may be referred to as DCI format 0_3, DCI format 1_3 or the like.

A value of the specific parameter ($n_{CI\_MC}$) may be determined by the number of cells (CCs) to be scheduled by a single DCI. For example, if the number of cells is one, the value of the specific parameter ($n_{CI\_MC}$) may be 0. Namely, the CCE index may be calculated without using the specific parameter ($n_{CI\_MC}$) as in the existing DCI (Cross-carrier scheduling). On the other hand, if the number of cells is two or more, the value of the specific parameter ($n_{CI\_MC}$) may be set by a higher layer parameter.

The value of the specific parameter ($n_{CI\_MC}$) may be included in the specific DCI. For example, in a case where Option 1 in the above-described applicable condition is employed, the value of the specific parameter ($n_{CI\_MC}$) may be included in the specific field illustrated in FIG. 7.

A value of the existing parameter ($n_{CI}$) may be determined by the number of cells (CCs) to be scheduled by CI. For example, if the number of cells is one, the value of the existing parameter ($n_{CI}$) may be a value set by a higher layer parameter (CrossCarrierSchedulingConfig). Namely, the CCE index may be calculated as in the existing DCI (Cross-carrier scheduling). On the other hand, if the number of cells is two or more, the value of the existing parameter ($n_{CI}$) may be 0. Namely, in Single DCI Multi-carrier PDSCH/PUSCH scheduling, the existing parameter ($n_{CI}$) may not be used.

(5.2) Operation Example 2

In Operation Example 2, a parameter in which the existing parameter used for identifying the resource element (CCE) associated with the existing DCI is extended, is employed as the specific parameter for the specific DCI. The existing parameter may be the $n_{CI}$.

Here, the existing parameter ($n_{CI}$) has a value set by a higher layer parameter (CrossCarrierSchedulingConfig). Namely, in Operation Example 2, the specific parameter has a value different from the value set by the higher layer parameter (CrossCarrierSchedulingConfig).

As options of Operation Example 2, the following options are considered.

In Option 1, an extension of the CI field included in the DCI may be assumed. Namely, the CI field may include a value associated with two or more CCs (e.g., Option 3 in the applicable condition illustrated in FIG. 9).

The value associated with two or more CCs may be set by a higher layer parameter. For example, the association between "011" and "CC#1+CC#2", the association between "100" and "CC#1+CC#3", and the like illustrated in FIG. 9, may be set by the higher layer parameter. The higher layer parameter may be a parameter in which CrossCarrierSchedulingConfig is extended or a parameter defined independent of CrossCarrierSchedulingConfig. The higher layer parameter is one example of the specific parameter.

Here, the number of bits in the CI field included in the specific DCI may be more than the existing number of bits (3 bits) in order to properly schedule a combination of two or more CCs.

In Option 2, a value which can be stored in a field other than the CI field included in the DCI, may be used for identifying the $n_{CI}$. Note that in the identification of the CCE associated with the existing DCI, the $n_{CI}$ is a value which can be stored in the CI field.

In Option 2-1, the field other than the CI field may be the FDRA field. A value which can be stored in the FDRA field, may be set by a higher layer parameter (e.g., RA type). The higher layer parameter may be considered to be a parameter for configuring two or more CCs by the specific DCI. The higher layer parameter may be a parameter in which the RA type is extended or a parameter defined independent of the RA type. The parameter is one example of the specific parameter.

In Option 2-2, the field other than the CI field may be a specific field included in the specific DCI (e.g., Option 1 in the applicable condition illustrated in FIG. 7). A value which can be stored in the specific field, may be set by a higher layer parameter. The higher layer parameter is one example of the specific parameter.

In Option 2-3, the $n_{CI}$ used for calculating the CCE index associated with the specific DCI, may be identified using the $n_{CI}$ used for calculating the CCE index associated with the existing DCI (i.e., 3 bits in the CF field) and the specific parameter. The specific parameter may be set by a higher layer parameter and be a value in the specific field included in the DCI (e.g., 1 bit). In the case, the $n_{CI\_MC}$ in Operation Example 1 may be used as the specific parameter.

(5.3) Operation Example 3

In Operation Example 3, a parameter which changes an interpretation of the existing parameter used for identifying the resource element (CCE) associated with the existing DCI, is employed as the specific parameter for the specific DCI. The existing parameter may be $m_{S,n\_CI}$ or $M^{(L)}s,max$. Specifically, as the number of PDCCH candidates used for identifying $m_{S,n\_CI}$, and $M^{(L)}\_s,max$, the number of PDCCH candidates in the following options may be employed.

Note that in the calculation of the CCE index associated with the existing DCI, the number of PDCCH candidates used for identifying $m_{S,n\_CI}$ or $M^{(L)}s,max$, is the number of PDCCH candidates regarding the CC (Scheduled cell) scheduled by DCI.

In Option 3-1, the number of PDCCH candidates may be the number of PDCCH candidates per AL (Aggregation Level) configured for a cell (Scheduling cell) in which the DCI is transmitted. For example, if the DCI which schedules two or more CCs is monitored on CC#0, the number of PDCCH candidates configured for CC#0 is employed.

In Option 3-2, the number of PDCCH candidates may be the number of PDCCH candidates per AL (Aggregation Level) configured for specific CC(s) (specific cell(s)) selected from among two or more CCs (Scheduled cells) scheduled by the specific DCI. The specific CC(s) (specific cell(s)) may be configured by a higher layer parameter. The higher layer parameter may include an index for identifying the specific CC(s) (specific cell(s)). The specific CC(s) (specific cell(s)) may be one CC (cell) or two or more CCs (cells).

Here, the specific CC(s) (specific cell(s)) corresponding to PDCCH candidate(s) may be a value which can be stored in a field included in the specific DCI. The field included in the specific DCI may the CI field (e.g., Option 3 in the applicable condition) or a new field (e.g., Option 1 in the applicable condition) .

In Option 3-3, the number of PDCCH candidates may be the number of PDCCH candidates per AL (Aggregation Level) configured in Single DCI Multi-carrier PDSCH/PUSCH scheduling. The number of PDCCH candidates may be set by a newly introduced higher layer parameter. For example, the number of PDCCH candidates may be the number of PDCCH candidates for the specific DCI (e.g., DCI format 0_3 or 1_3).

In Option 3-4, the number of PDCCH candidates may be determined according to the number of CCs (Scheduled cells) scheduled by the specific DCI. For example, if the number of Scheduled cells is one, the number of PDCCH candidates per AL (Aggregation Level) configured for Scheduled cell(s) may be applied. If the number of Scheduled cells is two or more, the number of PDCCH candidates in an option selected from among Options 3-1 to 3-3 may be applied.

(6) Action and Effect

In the embodiment, the UE 200 identifies a CCE associated with a specific DCI using a specific parameter for a specific DCI which schedules PDSCH/PUSCH to be transmitted on two or more CCs in Single DCI Multi-carrier PDSCH/PUSCH scheduling. According to this configuration, the CCE can be properly identified in Single DCI Multi-carrier PDSCH/PUSCH scheduling. For example, the UE 200 can distinguish PDCCH (CCE) between Single DCI Multi-carrier PDSCH/PUSCH scheduling and Cross-carrier scheduling.

(7) Other embodiments

Although the contents of the present invention have been described above with reference to the embodiment, the present invention is not limited to these descriptions, and it is obvious to those skilled in the art that various modifications and improvements can be made.

Although not particularly described in the above-described disclosure, the specific parameter may be a parameter which is implicitly or explicitly set by the higher layer parameter. The specific parameter may be a value in a field which can be included in the DCI.

Although not particularly described in the above-described disclosure, the higher layer parameter may be read as an RRC parameter. The higher layer parameter may be read as a MAC CE.

Although not particularly described in the above-described disclosure, the following UE Capability may be defined. The following UE Capability may be reported from the UE 200 to the gNB 100. For example, the UE Capability may include an information element on whether or not the UE 200 support Single DCI Multi-carrier PDSCH/PUSCH scheduling.

Here, the UE Capability may be defined per the UE 200, per FR, per TDD/FDD type, per band, per BC (Band Combination), per FS (Feature Set), or per FSPC (Feature Set Per Component carrier) .

In the above-described disclosure, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (FIG. 4 and FIG. 5) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

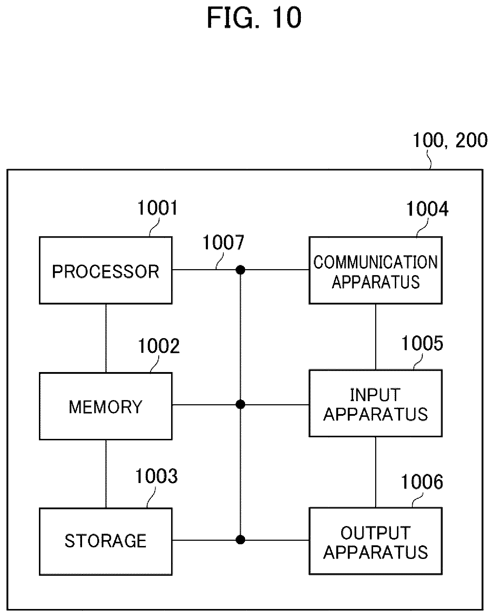

The gNB 100 and the UE 200 (apparatuses) which are described above may function as a computer that executes the processes of the radio communication method of the present disclosure. FIG. 10 is a diagram to illustrating an example of a hardware structure of the apparatuses. As illustrated in FIG. 10, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIG. 4) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message," and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG), (x is an integer or decimal, for example), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information to a terminal by the base station may be read as an instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe".

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "Sub-Carrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

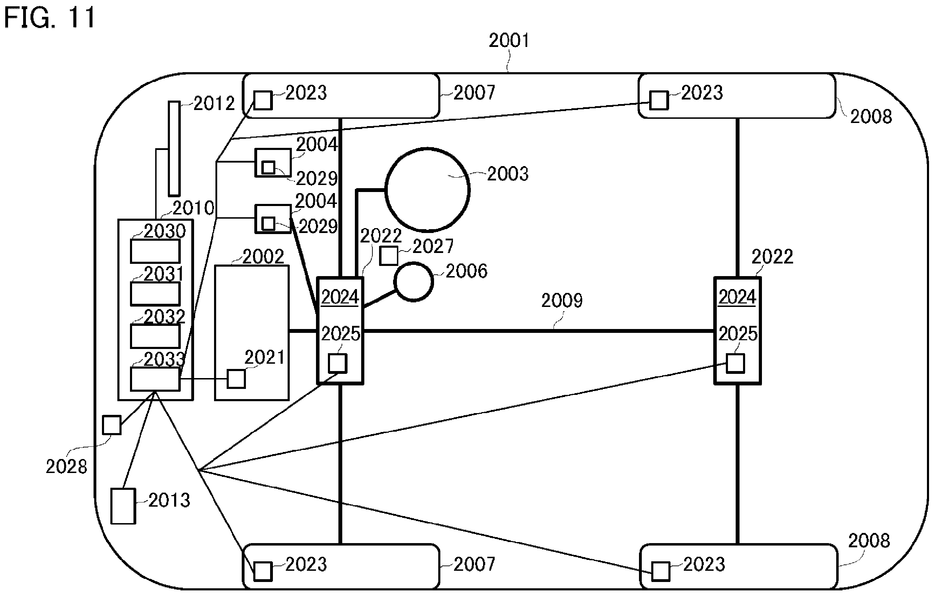

FIG. 11 illustrates an example of a configuration of a vehicle 2001. As illustrated in FIG. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal from the current sensor, which is input to the electronic control unit 2010, to external devices through radio communication. In addition, the communication module 2013 transmits to external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

(Supplementary Note)

The above-described disclosure may be described as follows.

A first feature is a terminal including: a receiving unit that receives a single specific downlink control information for scheduling a channel to be transmitted on two or more carriers; and a control unit that identifies a specific resource element associated with the specific downlink control information, wherein the control unit identifies the specific resource element using a specific parameter for the specific downlink control information.

A second feature is the terminal in the first feature in which the specific parameter is a parameter newly defined independent of an existing parameter used for identifying a resource element associated with an existing downlink control information.

A third feature is the terminal in the first feature in which the specific parameter is a parameter in which an existing parameter used for identifying a resource element associated with an existing downlink control information is extended.

A fourth feature is the terminal in the first feature in which the specific parameter is a parameter which changes an interpretation of an existing parameter used for identifying a resource element associated with an existing downlink control information.

A fifth feature is a base station including: a transmitting unit that transmits a single specific downlink control information for scheduling a channel to be transmitted on two or more carriers; and a control unit that assumes that a terminal identifies a specific resource element associated with the specific downlink control information, wherein the control unit assumes that the terminal identifies the specific resource element using a specific parameter for the specific downlink control information.

A sixth feature is a radio communication system including a terminal and a base station, wherein the terminal includes: a receiving unit that receives a single specific downlink control information for scheduling a channel to be transmitted on two or more carriers; and a control unit that identifies a specific resource element associated with the specific downlink control information, wherein the control unit identifies the specific resource element using a specific parameter for the specific downlink control information.

A seventh feature is a radio communication method including: a step A of receiving a single specific downlink control information for scheduling a channel to be transmitted on two or more carriers; and a step B of identifying a specific resource element associated with the specific downlink control information, wherein the step B includes a step for identifying the specific resource element using a specific parameter for the specific downlink control information.

[Explanation of Reference Numerals]

| | |
|---|---|
| 10 | radio communication system |
| 20 | NG-RAN |
| 100 | gNB |
| 110 | receiving unit |
| 120 | transmitting unit |
| 130 | control unit |
| 200 | UE |
| 210 | radio signal transmitting and receiving unit |
| 220 | amplifier unit |
| 230 | modulation and demodulation unit |
| 240 | control signal and reference signal processing unit |
| 250 | encoding and decoding unit |
| 260 | data transmitting and receiving unit |
| 270 | control unit |
| 1001 | processor |
| 1002 | memory |
| 1003 | storage |
| 1004 | communication apparatus |
| 1005 | input apparatus |
| 1006 | output apparatus |
| 1007 | bus |
| 2001 | vehicle |
| 2002 | drive unit |
| 2003 | steering unit |
| 2004 | accelerator pedal |
| 2005 | brake pedal |
| 2006 | shift lever |
| 2007 | front wheel |
| 2008 | rear wheel |
| 2009 | axle |
| 2010 | electronic control unit |
| 2012 | information service unit |
| 2013 | communication module |
| 2021 | current sensor |
| 2022 | revolution sensor |
| 2023 | pneumatic sensor |
| 2024 | vehicle speed sensor |
| 2025 | acceleration sensor |
| 2026 | brake pedal sensor |
| 2027 | shift lever sensor |
| 2028 | object detection sensor |
| 2029 | accelerator pedal sensor |
| 2030 | driving support system unit |
| 2031 | microprocessor |
| 2032 | memory (ROM, RAM) |
| 2033 | communication port |

**Claims**

1. A terminal comprising:

a receiving unit that receives a single specific downlink control information for scheduling a channel to be transmitted on two or more carriers; and

a control unit that identifies a specific resource element associated with the specific downlink control information, wherein the control unit identifies the specific resource element using a specific parameter for the specific downlink control information.

2. The terminal according to claim 1, wherein the specific parameter is a parameter newly defined independent of an existing parameter used for identifying a resource element associated with an existing downlink control information.

3. The terminal according to claim 1, wherein the specific parameter is a parameter in which an existing parameter used for identifying a resource element associated with an existing downlink control information is extended.

4. A base station comprising:

a transmitting unit that transmits a single specific downlink control information for scheduling a channel to be transmitted on two or more carriers; and

a control unit that assumes that a terminal identifies a specific resource element associated with the specific downlink control information, wherein the control unit assumes that the terminal identifies the specific resource element using a specific parameter for the specific downlink control information.

5. A radio communication system comprising a terminal and a base station,

wherein the terminal includes:

a receiving unit that receives a single specific downlink control information for scheduling a channel to be transmitted on two or more carriers; and

a control unit that identifies a specific resource element associated with the specific downlink control information,

wherein the control unit identifies the specific resource element using a specific parameter for the specific downlink control information.

6. A radio communication method comprising:

a step A of receiving a single specific downlink control information for scheduling a channel to be transmitted on two or more carriers; and

a step B of identifying a specific resource element associated with the specific downlink control information, wherein the step B includes a step for identifying the specific resource element using a specific parameter for the specific downlink control information.

# FIG. 1

# FIG. 2

FR1
{15,30,60} kHz SCS
5~100 MHz BW

FR2
{60,120,(240)} kHz SCS
50~400 MHz BW

FR2x

0.41 GHz  1 GHz  7.125 GHz  10 GHz  24.25 GHz  52.6 GHz  71 GHz  100 GHz

f

# FIG. 3

# FIG. 4

EP 4 572 484 A1

# FIG. 5

# FIG. 6

Single cell scheduling

Multi-cell scheduling

CC#0

PDCCH

PDCCH

CC#1
($n_{CI}=1$)

PDSCH/PUSCH

PDSCH/PUSCH

CC#2
($n_{CI}=2$)

PDSCH/PUSCH

EP 4 572 484 A1

# FIG. 7

| SPECIFIC FIELD (New field) | Scheduled cell(s) |
|---|---|
| 000 | CC#1+CC#2 |
| 001 | CC#1+CC#3 |
| 010 | ... |

# FIG. 8

| bit map | 1 | 0 | 1 | 1 |
|---------|------|------|------|------|
|         | CC#1 | CC#2 | CC#3 | CC#4 |

# FIG. 9

| CIF | Scheduled cell(s) |
|---|---|
| 000 | CC#1 |
| 001 | CC#2 |
| 010 | CC#3 |
| 011 | CC#1+CC#2 |
| 100 | CC#1+CC#3 |
| ... | ... |

# FIG. 10

100, 200

1001

PROCESSOR

1007

COMMUNICATION APPARATUS

1004

1002

MEMORY

INPUT APPARATUS

1005

1003

STORAGE

OUTPUT APPARATUS

1006

FIG. 11

2001

2012
2023  2007
2023  2008
2004
2029
2003
2004
2010
2029
2030
2022  2027
2031
2002
2006
2032
2024
2022
2033
2025
2024
2028
2021
2009
2025
2013
2023  2007
2023  2008

EP 4 572 484 A1

28

## INTERNATIONAL SEARCH REPORT

| International application No. |
|---|
| **PCT/JP2022/030746** |

| A. | CLASSIFICATION OF SUBJECT MATTER |
|---|---|

*H04W 72/0457*(2023.01)i; *H04W 72/23*(2023.01)i
FI:   H04W72/0457 110; H04W72/23

According to International Patent Classification (IPC) or to both national classification and IPC

| B. | FIELDS SEARCHED |
|---|---|

Minimum documentation searched (classification system followed by classification symbols)

H04W72/0457; H04W72/23

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | LG ELECTRONICS. Discussion on Multi-cell PUSCH/PDSCH scheduling with a single DCI [online]. 3GPP TSG RAN WG1 #109-e R1-2204631. 29 April 2022<br>    section 2 | 1, 3-6 |
| A | | 2 |
| Y | Moderator (ERICSSON). Agreed TPs from Email discussion [109-e-R17_DSS-01] [online]. 3GPP TSG RAN WG1 #109-e R1-2205584. 21 May 2022<br>    section 2 | 1, 3-6 |
| A | | 2 |
| A | NTT DOCOMO, INC. Discussion on multi-cell PUSCH/PDSCH scheduling with a single DCI [online]. 3GPP TSG RAN WG1 #109-e R1-2204398. 28 April 2022<br>    section 2 | 1-6 |

☐ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **3GPP**. New WID on Multi-carrier enhancements. *RP-213577, 3GPP TSG RAN Meeting #94e*, December 2021

- UE procedure for determining physical downlink control channel assignment. *3GPP TS38.213 V17.2.0*